# EUROPÄISCHE PATENTSCHRIFT

(11) **EP 1 737 628 B1**
(45) Veröffentlichungstag und Bekanntmachung des Hinweises auf die Patenterteilung: **30.09.2009**
(21) Anmeldenummer: 05739614.5
(22) Anmeldetag: 05.04.2005
(51) Int. Cl.: B26D 1/25

(54) **VORRICHTUNG ZUM ZERKLEINERN VON NAHRUNGSMITTELN**
DEVICE FOR COMMINUTING FOOD STUFFS
DISPOSITIF POUR DECOUPER DES ALIMENTS

(30) Priorität: 06.04.2004 DE 102004017334; 23.11.2004 DE 102004056405; 17.01.2005 DE 102005002329; 25.01.2005 US 646926 P; 08.02.2005 DE 102005005821
(43) Veröffentlichungstag der Anmeldung: 03.01.2007
(73) Patentinhaber: LEIFHEIT AG, 56377 Nassau/Lahn (DE)
(72) Erfinder: KLOTZ, Markus, 56357 Hainau (DE); SCHRAMM, Benjamin, 65558 Eppenrod (DE); KLANT, Keesjan, 9053 Teufen (CH)
(74) Vertreter: Naumann, Ulrich
(86) Internationale Anmeldenummer: PCT/EP2005/003564
(87) Internationale Veröffentlichungsnummer: WO 2005/097434

(56) Entgegenhaltungen:
- DE-C- 663 782
- DE-C- 844 651
- DE-U1- 9 201 765
- FR-A- 597 349
- GB-A- 1 599 694
- GB-A- 2 032 260
- GB-A- 2 313 771

## Beschreibung

Die Erfindung betrifft eine Vorrichtung zum Zerkleinern von Nahrungsmitteln mit einer Gleitbahn, auf der zum Ausführen eines Zerkleinerungsvorganges ein zu zerkleinerndes Gut verschiebbar ist, und mit zumindest einem Schneidmesser, wobei eine Umschaltvorrichtung vorgesehen ist, die zwischen einer Neutralstellung, in der zumindest die Schneidkante des Schneidmessers verdeckt und/oder versenkt ist, und einer Schneidstellung, in der die Schneidkante des Schneidmessers nicht verdeckt und nicht versenkt ist, umschaltet. *Des Weiteren betrifft die Erfindung ein austauschbares Messermodul für die Vorrichtung.*

Die DE 28 16 929 C2 offenbart eine Vorrichtung zum Zerkleinern von Nahrungsmitteln bestehend aus einer mit einem Handgriff versehenen länglichen Grundplatte, über deren Oberfläche das zu zerkleinernde Gut von Hand hin- und herbewegbar ist. Im mittleren Bereich weist die Vorrichtung ein austauschbares Zerkleinerungsblech auf.

An den meist sehr scharfen Schneiden der aus dem Stand der Technik bekannten Vorrichtungen zum Zerkleinern von Nahrungsmitteln kann man sich sowohl während der Bedienung, als auch bei unvorsichtiger Lagerung, beispielsweise in einer unaufgeräumten Küchenschublade, verletzen. Die Verwendung von Restehaltern, wie sie beispielsweise aus der DE 28 57 743 C2 schützt allenfalls vor der Verletzung während der Bedienung; und dies auch nur bei eine korrekter Handhabung der Vorrichtung zum Zerkleinern und des Restehalters.

Aus der DE 92 01 765 U1 ist eine Vorrichtung zum Zerkleinern von Nahrungsmitteln gemäß dem Oberbegriff des Patentanspruchs 1 bekannt. Bei der Vorrichtung wird zu zerkleinerndes Gut, beispielsweise Wurst, Käse, Gemüse oder dgl., über eine Gleitbahn geschoben. Entgegen der Verschieberichtung ist ein Schneidmesser fest an der Vorrichtung angeordnet, so dass durch das Verschieben des Guts eine Relativbewegung gegenüber dem Schneidmesser entsteht, wodurch das Gut zerkleinert, insbesondere zerschnitten wird. Um unterschiedliche Schnitttiefen realisieren zu können, lässt sich ein Abschnitt der Gleitbahn relativ zum Schneidmesser in unterschiedliche Positionen bringen. Zu diesem Zweck ist unterhalb eines absenkbaren Bereichs der Gleitbahn ein damit zusammenwirkender Schieber angeordnet, durch dessen Betätigung sich der absenkbare Abschnitt der Gleitbahn relativ zum Schneidmesser bewegen lässt. Durch Stellen des Schiebers kann zwischen einer Neutralstellung, in der die Schneidkante des Schneidmessers verdeckt ist, und verschiedenen Schneidstellungen umgeschaltet werden, aus denen sich abhängig vom Maß der Verstellung unterschiedliche Schnitttiefen ergeben. Der Schieber lässt sich in den verschiedenen Stellungen arretieren.

Als nachteilig an der bekannten Vorrichtung ist anzusehen, dass diese zur Benutzung in eine der Schneidstellungen zu bringen ist, wodurch die Schneidkante zumindest geringfügig freiliegt und für den Benutzer - der das zu zerkleinernde Gut über die Gleitbahn in Richtung des Schneidmessers bewegt - eine nicht unerhebliche Verletzungsgefahr darstellt. Die Neutralstellung, bei welcher die Schneidkante des Schneidmessers verdeckt ist, lässt sich nur durch Betätigung des Schiebers erreichen, was erst nach Benutzung der Vorrichtung sinnvoll ist. Ein Schutz des Benutzers vor Verletzungen während des bestimmungsgemäßen Gebrauchs der Vorrichtung ist daher nur in unzureichendem Maße gewährleistet.

Der Erfindung liegt daher die Aufgabe zugrunde, eine Vorrichtung zum Zerkleinern von Nahrungsmitteln anzugeben, die sich sicher bedienen und lagern lässt, wobei insbesondere die bei Benutzung der Vorrichtung vom Schneidmesser ausgehende Verletzungsgefahr gemindert sein soll. *Des Weiteren soll ein austauschbares Messermodul für die Vorrichtung angegeben werden.*

Die Aufgabe wird erfindungsgemäß durch eine Vorrichtung *gemäß Patentanspruch* 1 gelöst *Des Weiteren wird die Aufgabe durch ein Messermodul des nebengeordneten Patentanspruchs 12 gelöst*.

Die erfindungsgemäße Vorrichtung hat den Vorteil, dass die Schneidkante des Schneidmessers bzw. die Schneidkanten der Schneidmesser vorzugsweise erst unmittelbar vor dem eigentlichen Schneidvorgang - also erst kurz bevor das zu schneidende Gut das Schneidmesser erreicht - aus einer sicheren Neutralstellung in die Schneidstellung gebracht werden kann und vorzugsweise unmittelbar nach dem Schneidvorgang wieder in der sicheren Neutralstellung verschwindet. Wird die Vorrichtung nicht benutzt, kann sie ohne weitere Sicherheitsvorkehrungen gelagert und verstaut werden. Beim Wühlen in einer unaufgeräumten Küchenschublade ist es nahezu unmöglich, sich an den Schneidmessern der Vorrichtung zu verletzen. Auch während der Benutzung ist die Verletzungsgefahr stark minimiert, da sich die Schneidkante entweder in der sicheren Neutralstellung befinden oder - während des eigentlichen Schneidvorganges - von dem zu schneidenden Gut zumindest teilweise verdeckt ist. Erfindungsgemäß ist dabei die Umschaltvorrichtung durch das zu schneidende Gut und/oder durch einen Halter zum Halten des zu schneidenden Guts betätigbar.

In einer bevorzugten Ausführungsvariante beinhaltet die Umschaltvorrichtung beispielsweise eine Hebelvorrichtung (z.B. Umschalthebel), die durch das zu schneidende Gut und/oder durch einen Halter für das zu schneidende Gut automatisch dann bedient wird.

Vorzugsweise weist die Gleitbahn zumindest eine Führung für das zu schneidende Gut und/oder für den Halter des zu schneidenden Gutes auf, die ein Hin- und Herschieben auf der Gleitbahn erlaubt, jedoch ein seitliches Herunterrutschen des Gutes bzw. des Halters verhindert. Vorzugsweise ist der Halter aus einer zur Ebene der Gleitbahn senkrechten Richtung kommend in die Führung einklinkbar. Hierzu kann beispielsweise ein Rastmechanismus oder ein Schnappmechanismus vorgesehen sein.

Vorzugsweise schaltet die Umschaltvorrichtung von der Neutralstellung in die Schneidstellung um, wenn das zu schneidende Gut und/oder der Halter des zu schneidenden Gutes einen vorbestimmten Abstand zum Schneidmesser unterschreitet. In einer Variante ist vorgesehen, dass die Umschaltvorrichtung von der Neutralstellung in die Schneidstellung umschaltet, wenn das zu schneidende Gut und/oder der Halter des zu schneidenden Gutes eine vorbestimmte Position auf der Gleitbahn erreicht.

Die Umschaltvorrichtung schaltet vorzugsweise von der Schneidstellung in die Neutralstellung zurück, nachdem der eigentliche Scheidvorgang beendet ist. Die Umschaltvorrichtung ist vorzugsweise derart ausgebildet, dass das Schneidmesser bzw. die Schneidkante bei der Rückbewegung des zu schneidenden Gutes und/oder des Halters in der Neutralstellung verbleibt. Hierdurch ist eine weitgehend ruckelfreie und angenehme Hin- und Rückbewegung ermöglicht. Eine mögliche Realisierung kann darin bestehen, dass der Umschalthebel eine Ratschenfunktion hat, so dass dieser beim Belastung von einer Seite (Hinlauf) einrastet und eine Drehwelle, die mechanisch mit dem Schneidmesser verkoppelt ist bewegt, während durch einen Freilauf bei Belastung von der anderen Seite (Rücklauf) keine Kraftübertragung auf die Drehwelle erfolgt.

Vorzugsweise schaltet die Umschaltvorrichtung von der Schneidstellung in die Neutralstellung um, wenn das zu schneidende Gut und/oder der Halter des zu schneidenden Gutes einen weiteren vorbestimmten Abstand zum Schneidmesser überschreitet. In einer Variante schaltet die Umschaltvorrichtung von der Schneidstellung in die Neutralstellung um, wenn das zu schneidende Gut und/oder der Halter des zu schneidenden Gutes eine weitere vorbestimmte Position auf der Gleitbahn erreicht.

In einer ganz besonders bevorzugten Ausgestaltungsform schaltet die Umschaltvorrichtung in Abhängigkeit von der Bewegungsrichtung - vorzugsweise nur bei der Hinbewegung, bei der ein schnitt erfolgt, jedoch nicht bei der Rückbewegung - des zu schneidenden Gutes und/oder des Halters des zu schneidenden Gutes um.

Vorzugsweise ist das zumindest eine Schneidmesser relativ zur Gleitbahn beweglich angeordnet ist. Bei dieser Variante wird das Schneidmesser mechanisch gesteuert, um ein Umschalten zwischen der Neutralstellung und der Schneidstellung zu erzielen. Es auch möglich, statt des Schneidmessers die Gleitbahn oder Teile der Gleitbahn zu diesem Zweck beweglich auszugestalten und anzusteuern. In einer besonderen Ausführungsvariante bewegt die Umschaltvorrichtung zum Umschalten zwischen Neutralstellung und Schneidstellung eine - vorzugsweise als Bestandteil der Gleitbahn ausgebildete - bewegliche Zuführlippe.

Vorzugsweise ist die Gleitbahn auf einem Grundkörper angeordnet, wobei in der Neutralstellung zumindest die Schneidkante des Schneidmessers durch den Grundkörper verdeckt und/oder in diesem versenkt ist. In dieser Stellung kann der Benutzer gefahrlos mit den Fingern über die gesamte Gleitbahn streichen ohne sich zu verletzen.

In einer besonders vorteilhaften Ausführung der Vorrichtung befindet sich die Schneidkante des Schneidmessers in der Neutralstellung auf Höhe der Fläche (beispielsweise Ebene), in der die Gleitbahn liegt. Vorzugsweise befindet sich die Schneidkante des Schneidmessers in der Schneidstellung außerhalb der Fläche (beispielsweise Ebene), in der die Gleitbahn liegt.

Zur Einstellung der Schneiddicke ist der Relativabstand zwischen der Schneidkante und der Gleitbahn - bezogen auf die Schneidstellung - einstellbar.

Vorzugsweise weist die Umschaltvorrichtung einen Umschalthebel auf, der zumindest teilweise aus der Gleitbahn und/oder aus der Führung der Gleitbahn herausragt, beispielsweise so dass das über die Gleitbahn verschobene Gut und/oder der Halter den Umschalthebel beim Verschiebevorgang umlegt.

In einer bevorzugten Ausführungsform weist die Umschaltvorrichtung ein Getriebe auf, das die zum Umschalten zwischen Neutralstellung und Schneidstellung überträgt.

Vorzugsweise ist eine Federvorrichtung vorgesehen, die das Schneidmesser in der Neutralstellung hält. Die Umschaltvorrichtung arbeitet in dieser Variante beim Umschalten von der Neutralstellung in die Schneidstellung gegen die Federkraft an. Das Umschalten von der Schneidstellung in die Neutralstellung kann vorzugsweise - nach der mechanischen Freigabe - durch die Federvorrichtung erfolgen.

In einer Ausgestaltungsform ist die Schneidkante des Schneidmessers in der Schneidstellung parallel zur Gleitbahn angeordnet. Diese Ausgestaltungsform dient beispielsweise zum Schneiden von Scheiben oder zum Abtrennen von Streifen oder Würfeln nach einem oder mehreren Alligatorschnitten.

In einer anderen Ausgestaltungsform ist die Schneidkante des Schneidmessers in der Schneidstellung unter einem von 0 Grad verschiedenen Winkel - vorzugsweise senkrecht - zur Ebene der Gleitbahn angeordnet. Diese Ausgestaltungsform kann als Alligatormesser ausgebildet sein.

Das Schneidmesser kann vorzugsweise als V-Messer und/oder als Wellenmesser und/oder als Messerbündel und/oder als Kamm von Alligatormessem ausgestaltet sein.

In einer besonderen vorteilhaften Ausführungsform zumindest ein weiteres Schneidmesser vorgesehen. Diese kann beispielsweise V-Messer und/oder als Wellenmesser und/oder als Messerbündel ausgestaltet sein. Vorzugsweise ist das weitere Schneidmesser als Alligatormesser - beispielsweise zum Erzeugen von Streifen oder Würfeln - ausgeführt. Hierzu ist das zumindest eine weitere Schneidmesser als - vorzugsweise senkrecht auf der Gleitbahn stehendes Messerbündel ausgebildet.

In einer besonderen Ausführungsvariante schaltet die Umschaltvorrichtung auch das zumindest eine weitere Schneidmesser zwischen einer Neutralstellung, in der zumindest die weitere Schneidkante des weiteren Schneidmessers verdeckt und/oder versenkt ist, und einer Schneidstellung, in der die weitere Schneidkante des weiteren Schneidmessers nicht verdeckt und nicht versenkt ist, um.

Das zumindest eine weitere Schneidmesser kann jedoch auch relativ zur Gleitbahn unbeweglich angeordnet sein.

Vorzugsweise ist das zumindest eine Schneidmesser und/oder das zumindest eine weitere Schneidmesser als Bestandteil eines austauschbaren Messermoduls ausgebildet ist. Dies hat den Vorteil, dass der Benutzer - je nach Anwendung - zwischen verschieden ausgestalteten Messermodulen wählen kann. Außerdem muss nicht die gesamte Vorrichtung ausgetauscht werden, wenn ein Schneidmesser abgenutzt ist.

In einer besonderen Variante ist die Umschaltvorrichtung zumindest teilweise Bestandteil des austauschbaren Messermoduls.

In einer besonders bevorzugten Ausgestaltung ist eine Drehvorrichtung zum Drehen des zu scheidenden Gutes und/oder zumindest eines Teils eines Halters eines zu schneidenden Gutes vorgesehen. Vorzugsweise arbeitet die Drehvorrichtung automatisch. Sie kann derart ausgestaltet sein, dass die Drehvorrichtung die Drehstellung in Abhängigkeit von der Position des zu scheidenden Gutes und/oder des Halters des zu schneidenden Gutes relativ zur Gleitbahn einstellt. Vorzugsweise dreht die Drehvorrichtung ein zu zerkleinerndes Gut in 90 Grad Schritten um eine zur Gleitbahn senkrechte Drehachse dreht. Beispielsweise kann bei der Hinbewegung eine Drehung im Uhrzeigersinn und bei der Rückbewegung eine Drehung gegen den Urzeigersinn - oder umgekehrt - erfolgen.

In einer besonderen Ausführungsform ist die Vorrichtung zum Zerkleinern von Nahrungsmitteln als Reibe, insbesondere als Würfelreibe, und/oder als Hobel ausgebildet ist. Bei der Würfelreibe wird das zu zerkleinernde Gut vorzugsweise zunächst über einen Kamm von Alligatormessem geführt, dann um 90 Grad um eine zur Gleitbahn senkrechte Drehachse gedreht, nochmals über einen Kamm von Alligatormessem - vorzugsweise denselben - gerührt und schließlich mit einem parallel zur Gleitbahn angeordneten Schneidmesser abgetrennt. Vorzugsweise wird das Schneidmesser erst unmittelbar vor der letzten Phase (Abtrennschnitt) von der Umschaltvorrichtung von einer Neutralstellung in eine Schneidstellung gebracht.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine erfindungsgemäße Vorrichtung zum Zerkleinern von Nahrungs-mitteln in der Neutralstellung,
- Fig. 2: die erfindungsgemäße Vorrichtung zum Zerkleinern von Nahrungsmitteln in der Schnittstellung,
- Fig. 3a: die erfindungsgemäße Vorrichtung zum Zerkleinern von Nahrungsmitteln in einer Schnittansicht in der Neutralstellung,
- Fig. 3b: die erfindungsgemäße Vorrichtung zum Zerkleinern von Nahrungsmitteln in einer Schnittansicht in der Schneidstellung,
- Fig. 4: eine andere erfindungsgemäße Vorrichtung zum Zerkleinern von Nahrungsmitteln in der Neutralstellung,
- Fig. 5: eine andere erfindungsgemäße Vorrichtung zum Zerkleinern von Nahrungsmitteln in der Schneidstellung,

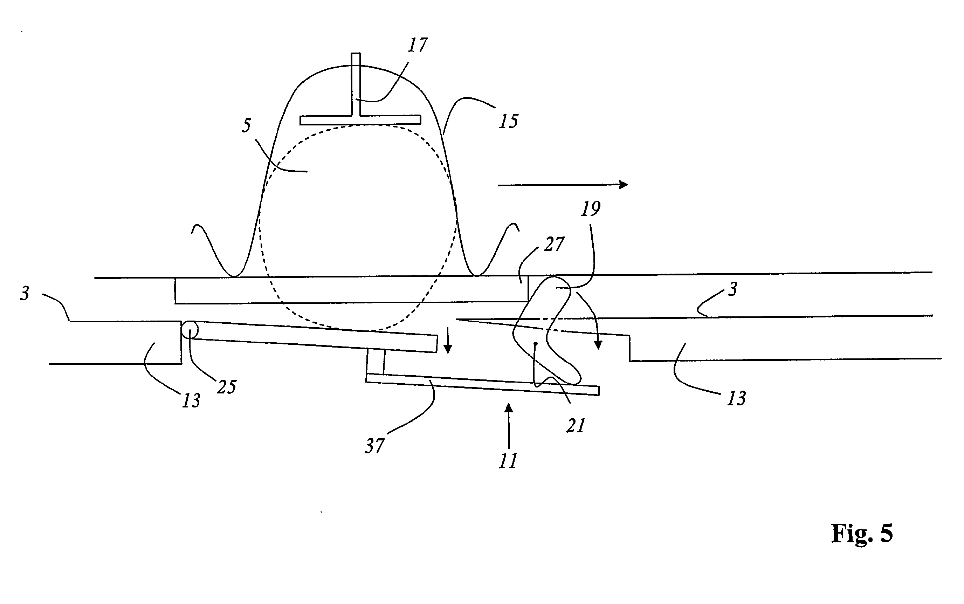

- Fig. 5: eine weitere erfindungsgemäße Vorrichtung zum Zerkleinern von Nahrungsmitteln,

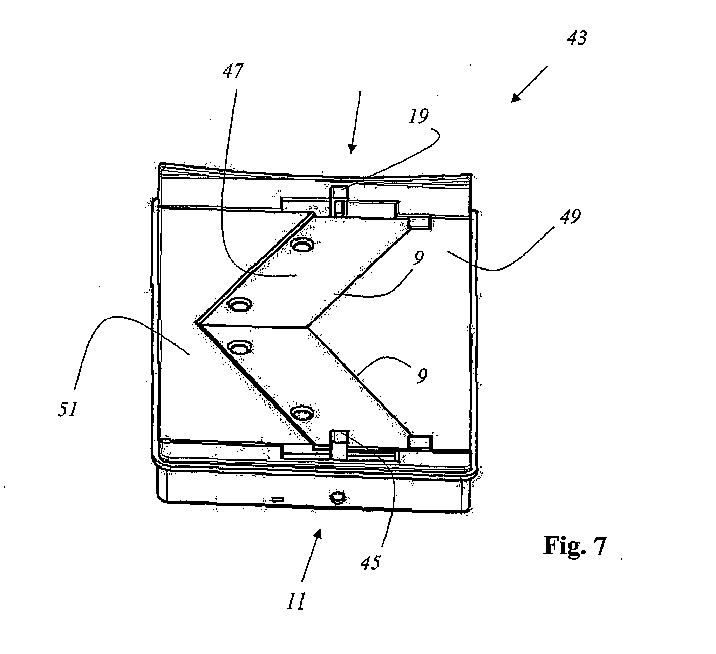

- Fig. 7: ein austauschbares Messermodul für eine Vorrichtung zum Zerkleinern von Nahrungsmitteln in der Neutralstellung,

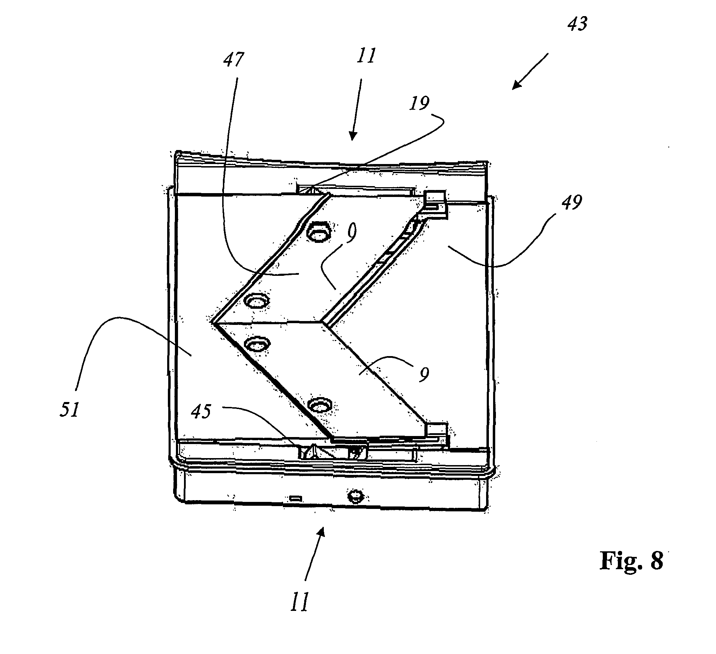

- Fig. 8: das austauschbares Messermodul für eine Vorrichtung zum Zerkleinern von Nahrungsmitteln in der Schneidstellung,

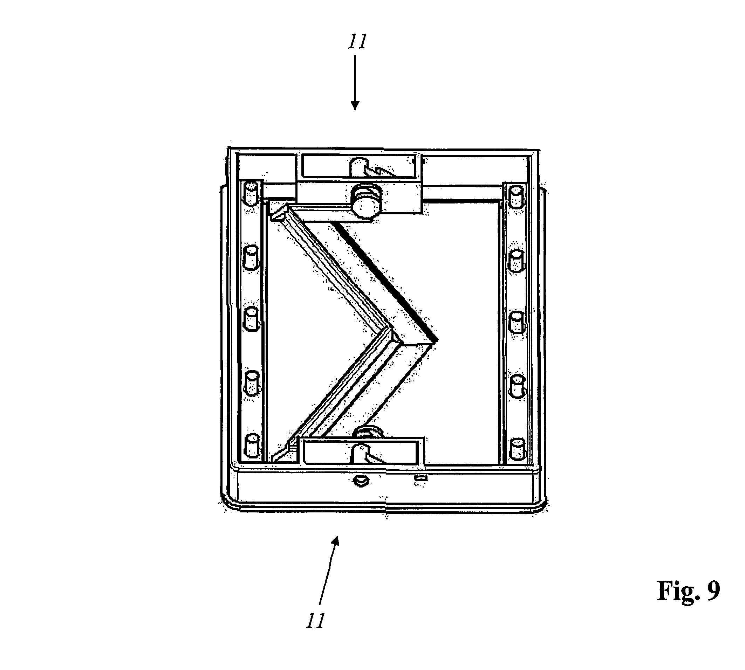

- Fig. 9: das austauschbares Messermodul für eine Vorrichtung zum Zerkleinern von Nahrungsmitteln von unten,

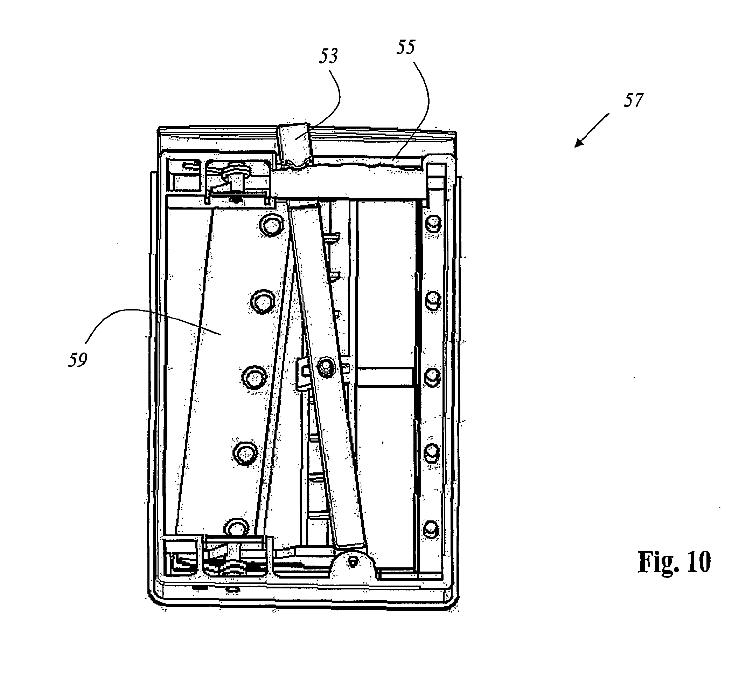

- Fig. 10: ein anderes austauschbares Messermodul für eine Vorrichtung zum Zerkleinern von Nahrungsmitteln von unten,

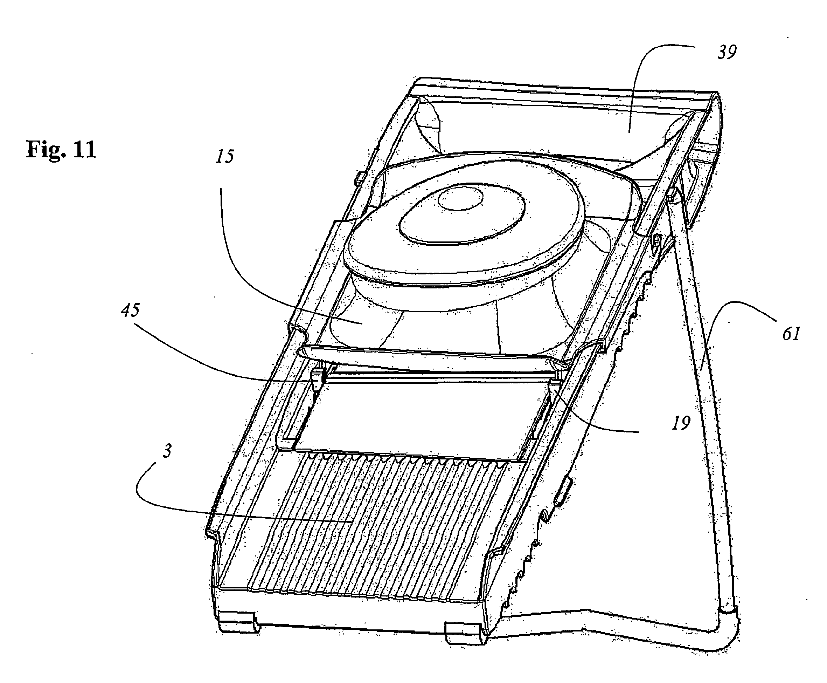

- Fig. 11: eine weitere erfindungsgemäße Vorrichtung zum Zerkleinern von Nahrungsmitteln.

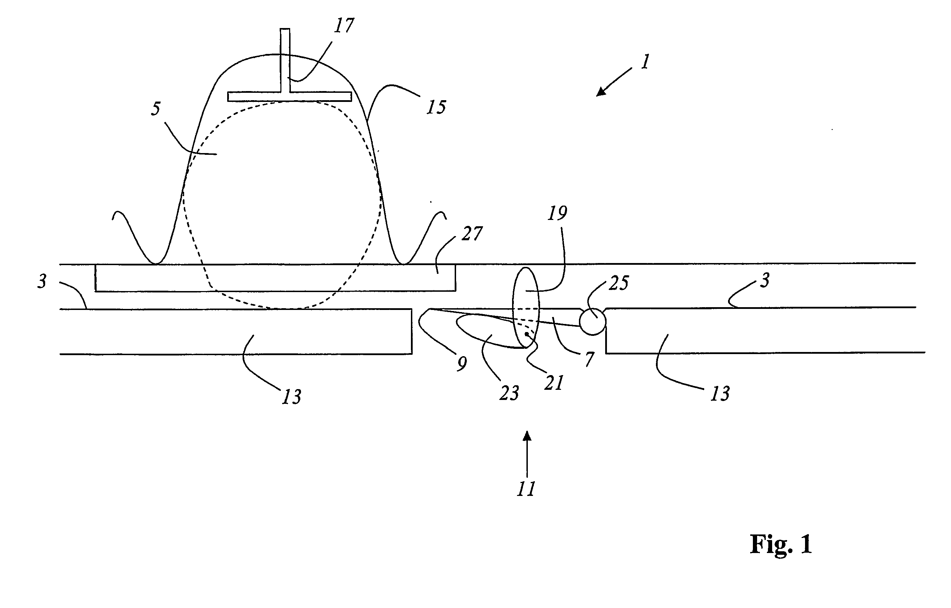

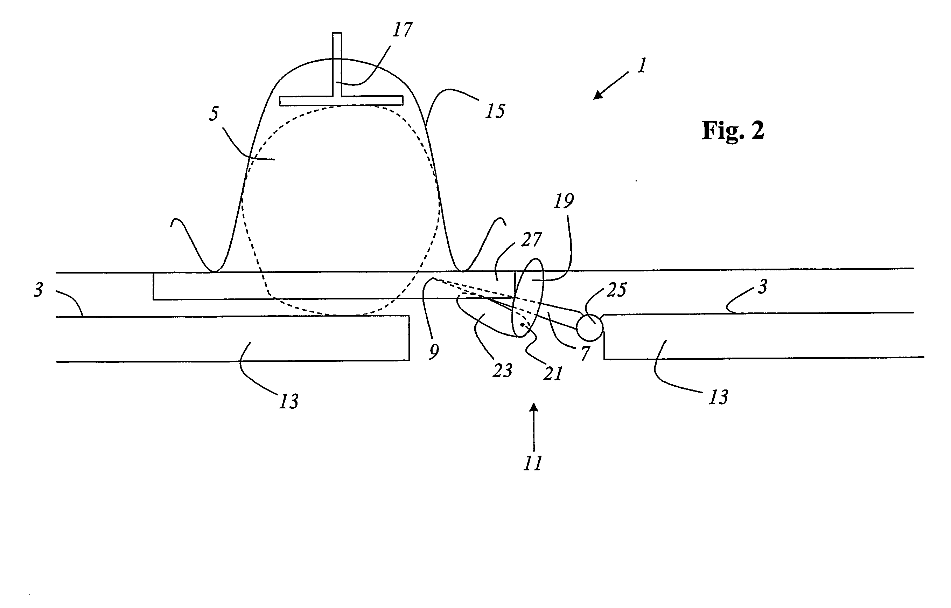

Fig. 1 zeigt eine erfindungsgemäße Vorrichtung 1 zum Zerkleinern von Nahrungsmitteln mit einer Gleitbahn 3, auf der zum Ausführen eines Zerkleinerungsvorganges ein zu zerkleinerndes Gut 5 verschiebbar ist, und mit einem Schneidmesser 7, das eine Schneidkante 9 aufweist. Die Vorrichtung 1 zum Zerkleinern von Nahrungsmitteln weist eine Umschaltvorrichtung 11 auf, die zwischen einer Neutralstellung, in der zumindest die Schneidkante 9 des Schneidmessers sich in der Ebene der Gleitbahn 3 befindet und dadurch durch den Grundkörper 13, der die Gleitbahn 3 trägt, verdeckt ist, und einer Schneidstellung, in der die Schneidkante 9 des Schneidmessers nicht verdeckt und nicht versenkt ist, umschaltet. In der Figur ist die Neutralstellung gezeigt. Das zu zerkleinernde Gut 5 kann vom Benutzer mit einem Halter 15 über die Gleitbahn hin und her verschoben werden. Der Halter 15 weist einen federbelasteten Andruckstempel 17 auf, der das zu zerkleinernde Gut 5 auf die Gleitbahn 3 drückt. An dem Halter 15 ist eine Schiene 27 angeordnet, die in einer nicht gezeigten Führungsnut laufend zusammen mit dem Halter 15 verschiebbar ist. Die Umschaltvorrichtung 11 weit einen Umschalthebel 19 auf, der um eine Drehachse 21 drehbar gelagert ist. Der Umschalthebel 19 ist - aus einer Blickrichtung von oben - seitlich neben dem Schneidmesser 7 angeordnet. In Bezug auf die Blickrichtung der Figur liegt das Schneidmesser 7 hinter dem Umschalthebel 19. Unterhalb des Schneidmessers 7 ist ein Nocken 23 angeordnet, der ebenfalls um die Drehachse 21 drehbar ist. Der Nocken 23 ist mit dem Umschalthebel mechanisch derart verkoppelt, dass dieser das Schneidmesser 7, das mit Hilfe des Gelenks 25 verkippbar gelagert ist, nach oben in die Schnittstellung drückt, wenn der Umschalthebel 19 von der Schiene 27 beim Verschieben des Halters 15 von links nach rechts verschoben wird. Die dann erzielte Schnittstellung ist in Fig. 2 illustriert. Während des eigentlichen Schneidsvorganges drückt die Schiene 27 den Umschalthebel 19, gegen die Kraft einer nicht gezeigten Federvorrichtung nach untern und damit über den Nocken 23 das Schneidmesser 7 nach oben in die Schnittstellung. Nachdem der Benutzer den Halter 15 vollständig über das Schneidmesser 7 geschoben hat, wird der Umschalthebel automatisch freigegeben und das Schneidmesser durch die Kraft der Federvorrichtung in die Neutralstellung gedrückt.

Die Umschaltvorrichtung 11 schaltet von der Neutralstellung in die Schneidstellung um, wenn der Halter 15 des zu schneidenden Gutes 5 einen vorbestimmten Abstand zum Schneidmesser unterschreitet. Analog schaltet die Umschaltvorrichtung 11 von der Schneidstellung in die Neutralstellung zurück, wenn der Halter 15 des zu schneidenden Gutes 5 einen weiteren vorbestimmten Abstand zum Schneidmesser 7 überschreitet. Der Abstand und der weitere Anstand sind bei der gezeigten Vorrichtung 1 durch die Länge der Schiene 27 und deren Position relativ zum Halter 15 bestimmt.

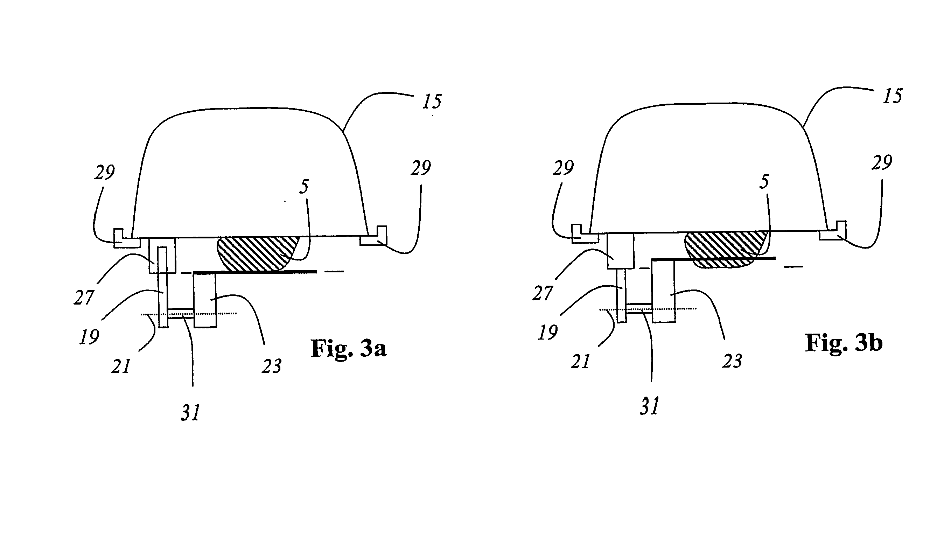

Fig. 3a zeigt die in Fig. 1 dargestellte erfindungsgemäße Vorrichtung zum Zerkleinem von Nahrungsmitteln in einer Frontal-Schnittansicht in der Neutralstellung. Es ist zu erkennen, dass die Schneidkante 9 sich in der Neutralstellung auf der Höhe der Gleitbahn 3 befindet. Der Halter 15 ist in seitlichen Führungselementen 29 geführt.

Fig. 3b zeigt die in Fig. 1 dargestellte erfindungsgemäße Vorrichtung zum Zerkleinem von Nahrungsmitteln in einer Frontal-Schnittansicht in der Schneidstellung. Die Schiene 27 drückt in dieser Schneidstellung dem Umschalthebel 19 nach unten und damit über die Drehwelle 31 und den Nocken 23, die sich alle gemeinsam um die Drehachse 21 drehen, die Schneidkante 9 nach oben.

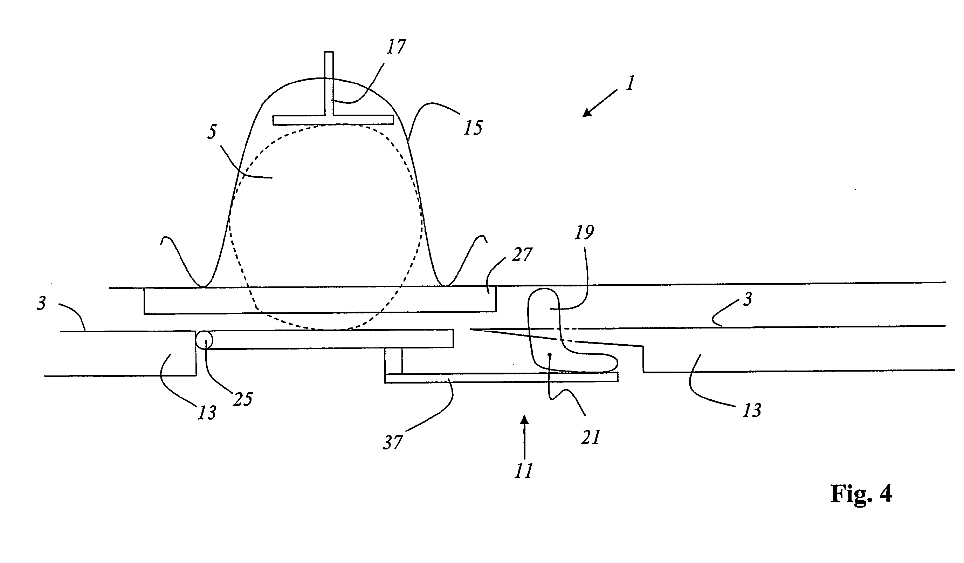

Fig. 4 zeigt eine andere erfindungsgemäße Vorrichtung zum Zerkleinern von Nahrungsmitteln in der Neutralstellung. In dieser Ausführungsvariante bewegt die Umschaltvorrichtung 11 zum Umschalten zwischen Neutralstellung und Schneidstellung eine - vorzugsweise als Bestandteil der Gleitbahn ausgebildete - bewegliche Zuführlippe 33, die mit Hilfe des Gelenkes 25 relativ zur Gleitbahn verkippbar ist. Bei dieser Variante weist die Umschaltvorrichtung als Umschalthebel 19 einen Winkelhebel 35 auf, der über ein mit der Zuführlippe 33 fest verbundenen Träger 37, die Zuführlippe 33 gegen Federkraft nach unten drückt, wenn der Umschalthebel 19 von der Schiene 27 des Halters 15 umgelegt wird. Durch das Herunterdrücken der Zuführlippe 33 wird die Verdeckung der Schneidkante 9 durch die Zuführlippe 33 vorübergehend beseitigt und die Schneidkante 9 frei gelegt und die Schneidstellung erreicht (siehe Fig. 5). Nachdem der Benutzer den Halter 15 vollständig über das Schneidmesser 7 geschoben hat, wird der Umschalthebel automatisch freigegeben und das Schneidmesser durch Feder in die Neutralstellung gedrückt. In der gezeigten Variante ist das Gelenk 25 als Filmgelenk einstückig zusammen mit der Gleitbahn und dem Grundkörper hergestellt und weist daher naturgemäß eine Federwirkung, die die Zuführlippe 33 in die Neutralstellung drückt, auf.

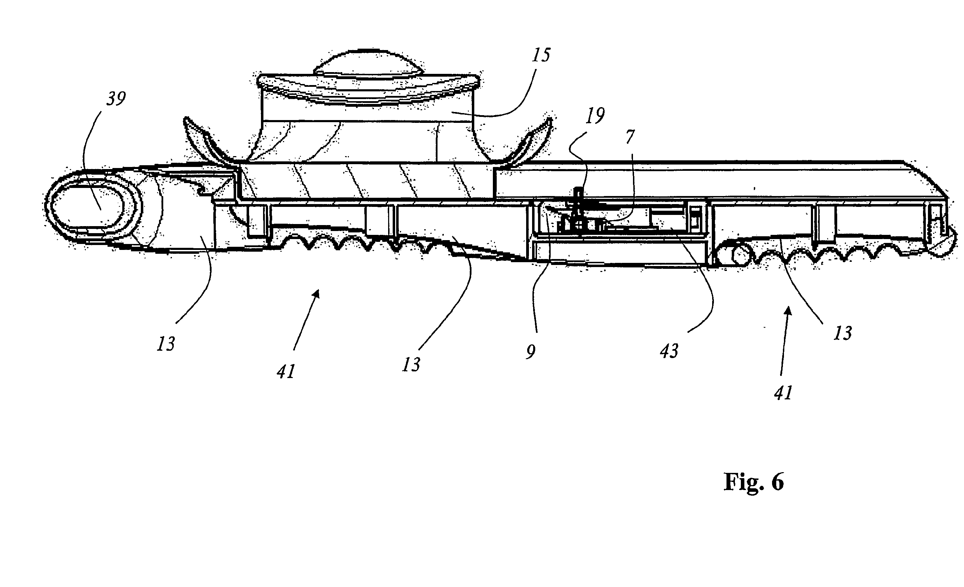

Fig. 6 zeigt eine andere erfindungsgemäße Vorrichtung 1 zum Zerkleinern von Nahrungsmitteln in der Neutralstellung. Die Vorrichtung 1 weist ein Schneidmesser 7 mit einer Schneidkante 9 und eine Umschaltvorrichtung 11 mit einem Umschalthebel 19 auf. Die Vorrichtung 1 ist mit einem Haltegriff 39 und mit Rastnasen 41 zum rutschfreien Aufsetzen der Vorrichtung auf ein Gefäß ausgerüstet. Das Schneidmesser 7 und die Umschaltvorrichtung 11 sind austauschbares Messermodul 43 ausgebildet.

Fig. 7 zeigt ein austauschbares Messermodul 43 für eine Vorrichtung 1 zum Zerkleinern von Nahrungsmitteln in der Neutralstellung. Das Messermodul 43 beinhaltet eine Umschaltvorrichtung 11 mit einem Umschalthebel 19 und einem weiteren Umschalthebel 45; sowie ein als V-Messer 47 ausgebildetes Schneidmesser 7. Das austauschbare Messermodul 43 weist Gleitbahnanschlusselemente 49, 51 auf, die die Schneidkante 9 in der gezeigten Neutralstellung verdecken.

Fig. 8 zeigt das bzgl. Fig. 6 beschriebene austauschbares Messermodul 43 in der Schneidstellung. Es ist zu erkennen, dass durch Umlegen des Umschalthebels 19 und des weiteren Umschalthebels 45 die Schneidkante 9 aus der Ebene der Gleitbahnanschlusselemente 49, 51 in die Schneidstellung gehoben ist.

Fig. 9 zeigt das austauschbares Messermodul 43 mit der Umschaltvorrichtung 11 von unten. In Fig. 10 ist ein anderes Messermodul 57 mit einem als Längsmesser 59 ausgebildeten Schneidmesser 7 von unten gezeigt. Das andere Messermodul 57 weist einen zur Einstellung der Schneiddicke auf. Mit dem Einstellhebel 53 der gegen Federkraft auf einer Anlaufschräge 55 aufliegt kann der Relativabstand zwischen der Schneidkante und der Gleitbahn - bezogen auf die Schneidstellung - eingestellt werden.

Fig. 11 zeigt eine perspektivische Ansicht, der bereits bzgl. Fig. 6 beschriebenen Vorrichtung 1 zum Zerkleinern von Nahrungsmitteln. Die Vorrichtung weist einen Ständerbügel 61 zum sichern Aufstellen auf.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Vorrichtung zum Zerkleinern von Nahrungsmitteln
- 3: Gleitbahn
- 5: zu zerkleinerndes Gut
- 7: Schneidmesser
- 9: Schneidkante
- 11: Umschaltvorrichtung
- 13: Grundkörper
- 15: Halter
- 17: Andruckstempel
- 19: Umschalthebel
- 21: Drehachse
- 23: Nocken
- 25: Gelenk
- 27: Schiene
- 29: Führungselemente
- 31: Drehwelle
- 33: Zuführlippe
- 35: Winkelhebel
- 37: Träger
- 39: Haltegriff
- 41: Rastnasen
- 43: Messermodul
- 45: Umschalthebel
- 47: V-Messer
- 49: Gleitbahnanschlusselement
- 51: Gleitbahnanschlusselement
- 53: Einstellhebel
- 55: Anlaufschräge
- 57: anderes Messermodul
- 59: Längsmesser
- 61: Ständerbügel

## Patentansprüche

1. Vorrichtung zum Zerkleinern von Nahrungsmitteln mit einer Gleitbahn (3), auf der zum Ausführen eines Zerkleinerungsvorganges ein zu zerkleinerndes Gut (5) verschiebbar ist, und mit zumindest einem Schneidmesser (7), wobei eine Umschaltvorrichtung (11) vorgesehen ist, die zwischen einer Neutralstellung, in der zumindest die Schneidkante (9) des Schneidmessers (7) verdeckt und/oder versenkt ist, und einer Schneidstellung, in der die Schneidkante (9) des Schneidmessers (7) nicht verdeckt und nicht versenkt ist, umschaltet,
**dadurch gekennzeichnet, dass** die Umschaltvorrichtung (11) während der Ausführung der zum Zerkleinerungsvorgang notwendigen Verschriebung des zu zerkleinernden Gutes (5) durch das zu schneidende Gut (5) und/oder durch einen Halter (15) zum Halten des zu schneidenden Gutes (5) betätigbar ist.

2. Vorrichtung nach Anspruch 1, **dadurch gekennzeichnet, dass** die Umschaltvorrichtung (11) von der Neutralstellung in die Schneidstellung umschaltet, wenn das zu schneidende Gut (5) und/oder der Halter (15) des zu schneidenden Gutes (5) einen vorbestimmten Abstand zum Schneidmesser (7) unterschreitet und/oder
dass die Umschaltvorrichtung (11) von der Neutralstellung in die Schneidstellung umschaltet, wenn das zu schneidende Gut (5) und/oder der Halter (15) des zu schneidenden Gutes (5) eine vorbestimmte Position auf der Gleitbahn (3) erreicht und/oder
dass die Umschaltvorrichtung (11) von der Schneidstellung in die Neutralstellung umschaltet, wenn das zu schneidende Gut (5) und/oder der Halter (15) des zu schneidenden Gutes (5) einen weiteren vorbestimmten Abstand zum Schneidmesser (7) überschreitet und/oder
dass die Umschaltvorrichtung (11) von der Schneidstellung in die Neutralstellung umschaltet, wenn das zu schneidende Gut (5) und/oder der Halter (15) des zu schneidenden Gutes (5) eine weitere vorbestimmte Position auf der Gleitbahn (3) erreicht und/oder
dass die Umschaltvorrichtung (11) in Abhängigkeit von der Bewegungsrichtung des zu schneidenden Gutes (5) und/oder des Halters (15) des zu schneidenden Gutes (5) umschaltet.

3. Vorrichtung nach Anspruch 1 oder 2, **dadurch gekennzeichnet, dass** das zumindest eine Schneidmesser (7) relativ zur Gleitbahn (3) beweglich angeordnet ist und/oder
dass die Gleitbahn (3) auf einem Grundkörper (13) angeordnet ist und dass in der Neutralstellung zumindest die Schneidkante (9) des Schneidmessers (7) durch den Grundkörper (13) verdeckt und/oder in diesem versenkt ist, wobei
sich die Schneidkante (9) des Schneidmessers (7) in der Neutralstellung vorzugsweise in der Fläche (beispielsweise Ebene) befindet, in der die Gleitbahn (3) liegt.

4. Vorrichtung nach einem der Ansprüche 1 bis 3, **dadurch gekennzeichnet, dass** sich die Schneidkante (9) des Schneidmessers (7) in der Schneidstellung außerhalb der Fläche (beispielsweise Ebene) befindet, in der die Gleitbahn (3) liegt und/oder
dass die Umschaltvorrichtung (11) zum Umschaltet zwischen Neutralstellung und Schneidstellung eine - vorzugsweise als Bestandteil der Gleitbahn (3) ausgebildete - bewegliche Zuführlippe (33) bewegt.

5. Vorrichtung nach einem der Ansprüche 1 bis 4, **dadurch gekennzeichnet, dass** zur Einstellung der Schneiddicke der Relativabstand zwischen der Schneidkante (9) und der Gleitbahn (3) - bezogen auf die Schneidstellung - einstellbar ist.

6. Vorrichtung nach einem der Ansprüche 1 bis 5, **dadurch gekennzeichnet, dass** die Umschaltvorrichtung (11) einen Umschalthebel (19, 45) aufweist, wobei
der Umschalthebel (19, 45) zumindest teilweise aus der Gleitbahn (3) und/oder einer Führung der Gleitbahn (3) herausragen kann.

7. Vorrichtung nach einem der Ansprüche 1 bis 6, **dadurch gekennzeichnet, dass** eine Federvorrichtung vorgesehen ist, die das Schneidmesser (7) durch Federkraft in die Neutralstellung drückt und/oder
dass die Schneidkante (9) des Schneidmessers (7) in der Schneidstellung in einer zur Ebene der Gleitbahn (3) parallelen Ebene angeordnet ist oder
dass die Schneidkante (9) des Schneidmessers (7) in der Schneidstellung unter einem von 0 Grad verschiedenen Winkel - vorzugsweise senkrecht - zur Ebene der Gleitbahn (3) angeordnet ist.

8. Vorrichtung nach einem der Ansprüche 1 bis 7, **dadurch gekennzeichnet, dass** das Schneidmesser (7) als V-Messer (47) und/oder als Wellenmesser und/oder als Messerbündel und/oder als Kamm von Alligatormessem ausgestaltet ist, wobei
zumindest ein weiteres Schneidmesser vorgesehen sein kann, wobei
die Umschaltvorrichtung auch das zumindest eine weitere Schneidmesser zwischen einer Neutralstellung, in der zumindest die weitere Schneidkante des weiteren Schneidmessers verdeckt und/oder versenkt ist, und einer Schneidstellung, in der die weitere Schneidkante des weiteren Schneidmessers nicht verdeckt und nicht versenkt ist, umschalten kann, wobei
das zumindest eine weitere Schneidmesser relativ zur Gleitbahn (3) unbeweglich angeordnet sein kann und wobei
das zumindest eine weitere Schneidmesser als - vorzugsweise senkrecht auf der Gleitbahn (3) stehendes Messerbündel ausgebildet sein kann.

9. Vorrichtung nach einem der Ansprüche 1 bis 8, **dadurch gekennzeichnet, dass** das zumindest eine Schneidmesser (7) und/oder das zumindest eine weitere Schneidmesser als Bestandteil eines austauschbaren Messermoduls (57) ausgebildet ist, wobei
die Umschaltvorrichtung (11) zumindest teilweise Bestandteil des austauschbaren Messermoduls (57) sein kann.

10. Vorrichtung nach einem der Ansprüche 1 bis 9, **dadurch gekennzeichnet, dass** eine Drehvorrichtung zum Drehen des zu scheidenden Gutes (5) und/oder zumindest eines Teils eines Halters (15) eines zu schneidenden Gutes (5) vorgesehen ist, wobei
die Drehvorrichtung automatisch arbeiten kann und/oder wobei
die Drehvorrichtung die Drehstellung in Abhängigkeit von der Position des zu schneidenden Gutes (5) und/oder des Halters (15) des zu schneidenden Gutes (5) relativ zur Gleitbahn (3) einstellen kann und/oder wobei
die Drehvorrichtung ein zu zerkleinernde Gut (5) in 90 Grad Schritten um eine zur Gleitbahn (3) senkrechte Drehachse drehen kann.

11. Vorrichtung nach einem der Ansprüche 1 bis 10, **dadurch gekennzeichnet, dass** die Vorrichtung zum Zerkleinern von Nahrungsmitteln als Reibe, insbesondere als Würfelreibe, und/oder als Hobel ausgebildet ist.

12. Messermodul für eine Vorrichtung zum Zerkleinern von Nahrungsmittel *, wobei die Vorrichtung eine Gleitbahn (3), zumindest ein Schneidmesser (7) und eine Umschaltvorrichtung (11) umfasst, wobei auf der Gleitbahn (3)* zum Ausführen eines Zerkleinerungsvorganges ein zu zerkleinerndes Gut (5) verschiebbar ist, wobei *die* Umschaltvorrichtung (11) zwischen einer Neutralstellung, in der zumindest die Schneidkante (9) des Schneidmessers (7) verdeckt und/oder versenkt ist, und einer Schneidstellung, in der die Schneidkante (9) des Schneidmessers (7) nicht verdeckt und nicht versenkt ist, umschaltet, *wobei* die Umschaltvorrichtung (11) während der Ausführung de zum Zerkleinerungsvorgang notwendigen Verschiebung des zu zerkleinernden Gutes (5) durch das zu schneidende Gut (5) und/oder durch einen Halter (15) zum Halten des zu schneidenden Gutes (5) betätigbar ist, *und wobei das Messermodul das zumindest eine Schneidmesser (7) und zumindest teilweise die Umschaltvorrichtung (11) umfasst und als Einheit austauschbar ausgeführt ist.*

## Claims

1. Device for comminuting foodstuffs, comprising a slide track (3) on which an article (5) to be comminuted is displaceable to carry out a comminuting operation, and comprising at least one cutting blade (7), wherein a switching device (11) is provided which switches between a neutral position, in which at least the cutting edge (9) of the cutting blade (7) is covered and/or sunken, and a cutting position, in which the cutting edge (9) of the cutting blade (7) is not covered and not sunken,
**characterised in that**, during the displacement of the article (5) to be comminuted, which is necessary for the comminuting operation, the switching device (11) is operable by the article (5) to be cut and/or by a holder (15) for holding the article (5) to be cut.

2. Device according to claim 1, **characterised in that** the switching device (11) switches from the neutral position to the cutting position when the article (5) to be cut and/or the holder (15) of the article (5) to be cut is less than a predefined distance from the cutting blade (7) and/or
the switching device (11) switches from the neutral position to the cutting position when the article (5) to be cut and/or the holder (15) of the article (5) to be cut reaches a predefined position on the slide track (3) and/or
the switching device (11) switches from the cutting position to the neutral position when the article (5) to be cut and/or the holder (15) of the article (5) to be cut is more than a further predefined distance from the cutting blade (7) and/or
the switching device (11) switches from the cutting position to the neutral position when the article (5) to be cut and/or the holder (15) of the article (5) to be cut reaches a further predefined position on the slide track (3) and/or
the switching device (11) switches in dependence upon the direction of the movement of the article (5) to be cut and/or of the holder (15) of the article (5) to be cut.

3. Device according to claim 1 or 2, **characterised in that** the at least one cutting blade (7) is arranged to be movable relative to the slide track (3) and/or
the slide track (3) is disposed on a base body (13) and, in the neutral position, at least the cutting edge (9) of the cutting blade (7) is covered by the base body (13) and/or is sunk therein, wherein,
in the neutral position, the cutting edge (9) of the cutting blade (7) is preferably situated in the surface (for example the plane) in which the slide track (3) lies.

4. Device according to any one of claims 1 to 3, **characterised in that**, in the cutting position, the cutting edge (9) of the cutting blade (7) is situated outside the surface (for example the plane) in which the slide track (3) lies and/or
the switching device (11) moves a movable feed lip (33) - preferably formed as a component part of the slide track (3) - for switching between neutral position and cutting position.

5. Device according to any one of claims 1 to 4, **characterised in that**, to adjust the cutting thickness, the relative distance between the cutting edge (9) and the slide track (3) - based on the cutting position - is adjustable.

6. Device according to any one of claims 1 to 5, **characterised in that** the switching device (11) has a switching lever (19, 45), wherein
the switching lever (19, 45) may project at least partially out of the slide track (3) and/or a guide of the slide track (3).

7. Device according to any one of claims 1 to 6, **characterised in that** a spring device is provided which presses the cutting blade (7) into the neutral position by spring force and/or
the cutting edge (9) of the cutting blade (7) is disposed, in the cutting position, in a plane parallel to the plane of the slide track (3) or
the cutting edge (9) of the cutting blade (7) is disposed, in the cutting position, at an angle other than 0 degree - preferably perpendicular - to the plane of the slide track (3).

8. Device according to any one of claims 1 to 7, **characterised in that** the cutting blade (7) is configured as a V-cutter (47) and/or as a serrated cutter and/or as a bundle of cutters and/or as a comb of alligator cutters, wherein
at least one further cutting blade may be provided, wherein
the switching device can also switch the at least one further cutting blade between a neutral position, in which at least the further cutting edge of the further cutting blade is covered and/or sunken, and a cutting position, in which the further cutting edge of the further cutting blade is not covered and not sunken, wherein
the at least one further cutting blade may be arranged to be immovable relative to the slide track (3) and wherein
the at least one further cutting blade may be configured as a bundle of blades - preferably located perpendicular to the slide track (3).

9. Device according to any one of claims 1 to 8, **characterised in that** the at least one cutting blade (7) and/or the at least one further cutting blade is formed as a component part of an interchangeable blade module (57), wherein
the switching device (11) may be at least partially a component part of the interchangeable blade module (57).

10. Device according to any one of claims 1 to 9, **characterised in that** a turning device is provided for turning the article (5) to be cut and/or at least a part of the holder (15) of an article (5) to be cut, wherein
the turning device may operate automatically and/or wherein
the turning device may adjust the rotational position in dependence upon the position of the article (5) to be cut and/or of the holder (15) of the article (5) to be cut relative to the slide track (3) and/or wherein
the turning device may turn an article (5) to be comminuted in 90 degree steps about a rotation axis perpendicular to the slide track (3).

11. Device according to any one of claims 1 to 10, **characterised in that** the device for comminuting foodstuffs is configured as a grater, especially as a dicing grater, and/or as a mandolin slicer.

12. Blade module for a device for comminuting foodstuffs, wherein the device comprises a slide track (3), at least one cutting blade (7) and a switching device (11), wherein an article (5) to be comminuted is displaceable on the slide track (3) to carry out a comminuting operation, wherein the switching device (11) switches between a neutral position, in which at least the cutting edge (9) of the cutting blade (7) is covered and/or sunken, and a cutting position, in which the cutting edge (9) of the cutting blade (7) is not covered and not sunken, wherein, during the displacement of the article (5) to be comminuted, which is necessary for the comminuting operation, the switching device (11) is operable by the article (5) to be cut and/or by a holder (15) for holding the article (5) to be cut, and wherein the blade module comprises the at least one cutting blade (7) and at least partially comprises the switching device (11) and is configured to be interchangeable as a unit.

## Revendications

1. Dispositif pour découper des aliments en menus morceaux, comportant une glissière (3), sur laquelle, pour effectuer un processus de découpe, peut être déplacé un aliment (5) à découper en menus morceaux, et comportant au moins une lame de coupe (7), un dispositif de commutation (11) étant prévu, lequel commute entre une position neutre, dans laquelle au moins l'arête de coupe (9) de la lame de coupe (7) est masquée ou encastrée, et une position de coupe, dans laquelle au moins l'arête de coupe (9) de la lame de coupe (7) n'est ni masquée ni encastrée,
**caractérisé en ce que**, pendant le déplacement de l'aliment (5) à découper, nécessaire pour effectuer le processus de découpe, le dispositif de commutation (11) peut être actionné par l'aliment (5) à découper et/ou par un poussoir (15) destiné à maintenir l'aliment (5) à découper.

2. Dispositif selon la revendication 1, **caractérisé en ce que** le dispositif de commutation (11) commute de la position neutre dans la position de coupe lorsque l'aliment (5) à découper et/ou le poussoir (15) de l'aliment (5) à découper est écarté de la lame de coupe (7) d'une distance inférieure à une distance prédéfinie et/ou
**en ce que** le dispositif de commutation (11) commute de la position neutre dans la position de coupe lorsque l'aliment (5) à découper et/ou le poussoir (15) de l'aliment (5) à découper atteint une position prédéterminée sur la glissière (3), et/ou
**en ce que** le dispositif de commutation (11) commute de la position de coupe dans la position neutre lorsque l'aliment (5) à découper et/ou le poussoir (15) de l'aliment (5) à découper est écarté de la lame de coupe (7) d'une distance supérieure à une autre distance prédéfinie, et/ou
**en ce que** le dispositif de commutation (11) commute de la position de coupe dans la position neutre lorsque l'aliment (5) à découper et/ou le poussoir (15) de l'aliment (5) à découper atteint une autre position prédéterminée sur la glissière (3), et/ou
**en ce que** le dispositif de commutation (11) commute en fonction du sens de déplacement de l'aliment (5) à découper et/ou du poussoir (15) de l'aliment (5) à découper.

3. Dispositif selon la revendication 1 ou 2, **caractérisé en ce que** ladite au moins une lame de coupe (7) est montée de manière mobile par rapport à la glissière (3), et/ou
**en ce que** la glissière (3) est disposée sur un corps de base (13) et **en ce que**, dans la position neutre, au moins l'arête de coupe (9) de la lame de coupe (7) est masquée par le corps de base (13) ou est encastrée dans celui-ci, sachant que
dans la position neutre, l'arête de coupe (9) de la lame de coupe (7) se situe de préférence dans la surface (par exemple, le plan) dans laquelle se situe la glissière (3).

4. Dispositif selon l'une quelconque des revendications 1 à 3, **caractérisé en ce que**, dans la position de coupe, l'arête de coupe (9) de la lame de coupe (7) se situe en dehors de la surface (par exemple, le plan) dans la laquelle se situe la glissière (3), et/ou
**en ce que**, pour commuter entre la position neutre et la position de coupe, le dispositif de commutation (11) déplace une lèvre de guidage (33) mobile - réalisée de préférence sous forme de partie intégrante de la glissière (3).

5. Dispositif selon l'une quelconque des revendications 1 à 4, **caractérisé en ce que** pour régler l'épaisseur de coupe, il est possible de régler - par référence à la position de coupe - la distance relative ente l'arête de coupe (9) et la glissière (3).

6. Dispositif selon l'une quelconque des revendications 1 à 5, **caractérisé en ce que** le dispositif de commutation (11) comporte un levier de commutation (19, 45),
ledit levier de commutation (19, 45) pouvant s'avancer en saillie au moins partiellement hors de la glissière (3) et/ou d'un guidage de la glissière (3).

7. Dispositif selon l'une quelconque des revendications 1 à 6, **caractérisé en ce qu'**il est prévu un dispositif à ressort qui, sous l'effet de la force du ressort, pousse la lame de coupe (7) dans la position neutre, et/ou
**en ce que**, dans la position de coupe, l'aréte de coupe (9) de la lame de coupe (7) est disposée dans un plan parallèle au plan de la glissière (3), ou
**en ce que**, dans la position de coupe, l'arête de coupe (9) de la lame de coupe (7) est disposée - de préférence, perpendiculairement - en formant avec le plan de la glissière (3) un angle différent de 0 degré.

8. Dispositif selon l'une quelconque des revendications 1 à 7, **caractérisé en ce que** la lame de coupe (7) est réalisée sous la forme d'une lame en V (47) et/ou sous la forme d'une lame ondulée et/ou sous la forme d'un ensemble de lames et/ou sous la forme d'un peigne pour coupe-légumes de type alligator, sachant
qu'il est possible de prévoir au moins une lame de coupe supplémentaire,
le dispositif de commutation étant apte à commuter également ladite au moins une lame de coupe supplémentaire entre une position neutre, dans laquelle au moins l'arête de coupe supplémentaire de la lame de coupe supplémentaire est masquée ou encastrée, et une position de coupe, dans laquelle au moins l'arête de coupe supplémentaire de la lame de coupe supplémentaire n'est ni masquée ni encastrée,
ladite au moins une lame de coupe supplémentaire pouvant être disposée de manière immobile par rapport à la glissière (3) et
ladite au moins une lame de coupe supplémentaire pouvant être disposée sous la forme d'un ensemble de lames, disposé de préférence perpendiculairement à la glissière (3).

9. Dispositif selon l'une quelconque des revendications 1 à 8, **caractérisé en ce que** ladite au moins une lame de coupe (7) et/ou ladite au moins une lame de coupe supplémentaire sont réalisées sous la forme d'une partie intégrante d'un module de coupe (57) amovible,
le dispositif de commutation (11) pouvant être au moins partiellement une partie intégrante du module de coupe (57) amovible.

10. Dispositif selon l'une quelconque des revendications 1 à 9, **caractérisé en ce qu'**il est prévu un dispositif rotatif destiné à faire tourner l'aliment (5) à découper et/ou au moins une partie d'un poussoir (15) pour un aliment (5) à découper,
ledit dispositif rotatif pouvant fonctionner automatiquement, et/ou
ledit dispositif rotatif pouvant régler par rapport à la glissière (3) la position de rotation en fonction de la position de l'aliment (5) à découper et/ou du poussoir (15) de l'aliment (5) à découper, et/ou
ledit dispositif rotatif pouvant faire tourner un aliment (5) à découper par pas de 90 degrés autour d'un axe de rotation perpendiculaire à la glissière (3).

11. Dispositif selon l'une quelconque des revendications 1 à 10, **caractérisé en ce que** le dispositif pour découper des aliments en menus morceaux est réalisé sous la forme d'une râpe, en particulier sous la forme de râpe pour découpe en cubes, et/ou sous la forme d'une mandoline de cuisine.

12. Module de coupe pour un dispositif destiné à découper des aliments en menus morceaux, sachant que ledit dispositif comporte une glissière (3), au moins une lame de coupe (7) et un dispositif de commutation (11), un aliment (5) à découper en menus morceaux pouvant être déplacé sur la glissière (3) en vue d'effectuer un processus de découpe, le dispositif de commutation (11) commutant entre une position neutre, dans laquelle au moins l'arête de coupe (9) de la lame de coupe (7) est masquée ou encastrée, et une position de coupe, dans laquelle au moins l'arête de coupe (9) de la lame de coupe (7) n'est ni masquée ni encastrée, le dispositif de commutation (11), pendant le déplacement de l'aliment (5) à découper, nécessaire pour effectuer le processus de découpe, peut être actionné par l'aliment (5) à découper et/ou par un poussoir (15) destiné à maintenir l'aliment (5) à découper, et le module de coupe comportant ladite au moins une lame de coupe (7) et au moins partiellement le dispositif de commutation (11) et étant réalisé sous la forme d'une unité amovible.
